# DEMANDE DE BREVET EUROPEEN

(11) **EP 4 474 121 A1**
(43) Date de publication de la demande: **11.12.2024**
(21) Numéro de dépôt: 23177386.2
(22) Date de dépôt: 05.06.2023
(51) Int. Cl.: B28B 11/00, G04B 3/04, G04B 19/04, G04B 19/12, G04B 19/28

(54) **COMPOSANT HORLOGER ET SON PROCEDE DE FABRICATION**

(71) Demandeur: ROLEX SA, 1211 Genève 26 (CH)
(72) Inventeur: BIENVENU, Carine, 74370 Pringy (FR); FLURI, Grégoire, 1212 Lancy (CH); ROBIN, Jean-Baptiste, 74100 Annemasse (FR)
(74) Mandataire: Novagraaf International SA

(57) **Abrégé**

L'invention concerne un procédé de fabrication d'un composant horloger, comprenant les étapes consistant à :
- (10) former une ébauche (200E1), notamment par injection, comportant au moins une surface de base (210) et au moins une portion en saillie (220) par rapport à la surface de base (210),
- (20) former au moins une couche de revêtement (250) recouvrant au moins une partie de la surface de base (210) et/ou sur au moins une partie de la portion en saillie (220),
- (30) retirer par ablation laser au moins une partie de ladite au moins une couche de revêtement (250),
- (40) texturer par traitement laser au moins une partie de la surface de base (210) et/ou au moins une partie de la portion en saillie (220), et/ou au moins une partie de l'au moins une couche de revêtement (250).

## Description

### Domaine technique de l'invention

La présente invention concerne de manière générale la fabrication de composants horlogers, et en particulier, la présente invention peut concerner la fabrication de composants horlogers ayant des parties en relief, et des parties recouvertes par un revêtement.

### État de la technique

Dans l'art antérieur des composants horlogers avec des parties en relief, on connaît le document EP 3 892 151 A1 qui divulgue un composant horloger avec des parties recouvertes par un revêtement, et qui peut comprendre des inserts décoratifs en relief. En contrepartie, ce document ne propose pas de solutions pour texturer certaines parties du composant, ni pour proposer le même composant avec des parties en relief ayant un aspect spécifique par rapport à une partie de base du composant. De tels composants horlogers (revêtus, avec des parties en relief) sont souvent utilisés comme pièces visibles d'une pièce d'horlogerie et doivent donc être exécutés de manière précise et fiable pour garantir le plus bel aspect à l'utilisateur, de manière durable.

### Exposé de l'invention

Un but de la présente invention est d'améliorer l'art antérieur mentionné ci-dessus et en particulier, tout d'abord, de proposer un procédé de fabrication d'un composant horloger qui permet de fabriquer de manière efficace, rapide, précise et robuste un composant horloger qui présente des parties en relief, et des parties de différentes couleurs et/ou de différentes textures, pour proposer à l'utilisateur un bel aspect qui durera dans le temps. Un but de la présente invention est également de proposer un composant horloger qui présente des parties en saillie ou en relief, et des parties de différentes couleurs et/ou de différentes textures, pour proposer à l'utilisateur un composant horloger présentant un bel aspect qui durera dans le temps, ainsi que des sensations haptiques agréables permettant une lecture multisensorielle des motifs.

Pour cela, un premier aspect de l'invention concerne un procédé de fabrication d'un composant horloger, comprenant les étapes consistant à :
- former une ébauche, notamment par injection, comportant au moins une surface de base et au moins une portion en saillie par rapport à la surface de base,
- former au moins une couche de revêtement recouvrant au moins une partie de la surface de base et/ou recouvrant au moins une partie de l'au moins une portion en saillie,
- retirer par ablation laser au moins une partie de ladite au moins une couche de revêtement,
- texturer par traitement laser au moins une partie de la surface de base préalablement recouverte par ladite au moins une couche de revêtement et/ou au moins une partie de l'au moins une portion en saillie préalablement recouverte par ladite au moins une couche de revêtement, et/ou au moins une partie de l'au moins une couche de revêtement.

Le procédé selon la mise en oeuvre ci-dessus comprend une étape consistant à recouvrir la surface de base et l'au moins une portion en saillie par un revêtement, et comprend ensuite une étape consistant à retirer le revêtement ou au moins une couche de revêtement et à texturer la surface visible du composant. On peut donc proposer un composant horloger, avec des parties en saillie ou en relief, des parties recouvertes par un revêtement, et des parties texturées, qui présente un bel aspect et/ou une très grande précision d'exécution, puisque la délimitation du revêtement et/ou la texturation ont été effectuées par un traitement laser. On peut aussi proposer des matières d'ébauche et/ou de revêtement résistantes aux sollicitations environnementales ou aux chocs, avec une grande résistance à l'usure, et/ou une grande dureté, le traitement laser pouvant aisément retirer le revêtement ou au moins une couche de revêtement et/ou texturer la matière de l'ébauche. On peut noter que l'on peut former au moins une couche de revêtement recouvrant au moins une partie de la surface de base et/ou au moins une partie de l'au moins une portion en saillie, c'est-à-dire qu'on peut former une seule couche de revêtement, mais on peut former aussi deux, trois ou encore plus de couches de revêtement. On peut prévoir que certaines couches de revêtement recouvrent toutes les parties de l'ébauche, ou toutes les parties qui seront visibles pour l'utilisateur. On peut aussi prévoir que certaines couches de revêtement recouvrent partiellement l'ébauche, ou partiellement les parties qui seront visibles pour l'utilisateur.

Le procédé de fabrication et/ou le composant horloger peuvent en outre présenter une ou plusieurs des caractéristiques suivantes, prises seules ou en combinaison.

Selon un mode de réalisation, l'étape de retrait par ablation laser et l'étape de texturation par traitement laser sont au moins partiellement simultanées, et/ou effectuées avec une même source laser. En particulier, on peut prévoir que sur les parties où on retire tout le revêtement, une texturation est formée sur la matière préalablement revêtue lors du même passage du faisceau laser, ou lors des mêmes passages du faisceau laser sur le composant horloger que ceux destinés à retirer le revêtement. Autrement dit, l'étape de retrait et l'étape de texturation sont simultanées, effectuées lors de la même opération d'irradiation, lors du même passage du faisceau laser. On obtient alors une très grande précision, car la frontière d'une zone revêtue correspond à la frontière d'une zone texturée : il n'y a aucun décalage ni zone « ni revêtue-ni texturée » entre une zone revêtue et une zone texturée. Autrement dit, l'ablation laser du revêtement effectue en même temps la texturation et cela permet de passer directement d'une surface revêtue à une surface mise à nue et texturée. En d'autres termes, l'étape de retrait par ablation laser et l'étape de texturation par traitement laser sont au moins partiellement simultanées, c'est-à dire qu'elles sont réalisées en même temps, et/ou que l'irradiation de la pièce par le faisceau laser (c'est-à-dire le passage d'un même et unique faisceau laser) conduit tout à la fois à retirer ladite au moins une couche de revêtement et à texturer au moins une partie de la surface de base (préalablement recouverte par ladite au moins une couche de revêtement) et/ou au moins une partie de l'au moins une portion en saillie (préalablement recouverte par ladite au moins une couche de revêtement), et/ou au moins une partie de l'au moins une couche de revêtement.

Selon un mode de réalisation, l'étape de retrait par ablation laser est effectuée pour :
- retirer localement une épaisseur totale du revêtement et éventuellement une épaisseur de l'ébauche depuis la surface de base et/ou
- retirer localement une épaisseur du revêtement inférieure à l'épaisseur totale du revêtement et/ou
- retirer localement une épaisseur variable du revêtement strictement inférieure à l'épaisseur totale du revêtement. Le traitement d'ablation et/ou de texturation effectué avec la source laser permet une grande variété de retraits et/ou de texturations, sur le même composant : à certains endroits, on peut prévoir de retirer tout le revêtement, et éventuellement de texturer la matière de l'ébauche, à d'autres endroits, on peut prévoir de retirer une partie du revêtement, à savoir uniquement certaines couches de revêtement, et à encore d'autres endroits, on peut prévoir de retirer une partie variable du revêtement, et enfin à encore d'autres endroits, on peut prévoir de texturer le revêtement.

De préférence, l'étape de retrait est simultanée et/ou réalisée avec la même source laser que l'étape de texturation. Selon une mise en oeuvre particulière, ces deux étapes sont effectuées sur un revêtement recouvrant au moins une partie de la surface de base, au moins une partie de la surface formant le sommet de l'au moins une portion en saillie et au moins une partie de la surface formant le flanc de l'au moins une portion en saillie, et visent à retirer le revêtement recouvrant au moins une partie de la surface de base, ainsi qu'à texturer au moins une partie de la surface de base. Selon cette mise en oeuvre, l'au moins une portion en saillie est revêtue (de préférence intégralement revêtue) par ladite au moins une couche de revêtement, la surface de base de l'ébauche étant dépourvue de revêtement (de préférence intégralement dépourvue de revêtement), et la surface de base de l'ébauche étant texturée (de préférence intégralement texturée). Selon cette mise en oeuvre, il n'y a aucune zone de transition ni décalage entre les zones revêtues et texturées, car au niveau de la surface de base qui était initialement revêtue, c'est la même opération de traitement laser qui a effectué le retrait du revêtement et la texturation de la matière : une zone mise à nu du revêtement est simultanément texturée.

Selon un mode de réalisation, l'étape de retrait par ablation laser et/ou l'étape de texturation par traitement laser sont effectuées avec une source laser à impulsions ultracourtes, et de préférence avec une source laser à impulsions agencée pour émettre des impulsions de l'ordre de la nanoseconde, et plus préférentiellement de l'ordre de la picoseconde, et encore plus préférentiellement de l'ordre de la femtoseconde. Une telle source laser permet d'effectuer des traitements d'une grande précision et/ou sans affecter thermiquement le reste de la pièce. On peut typiquement prévoir d'imposer un mouvement relatif entre le composant horloger et la source laser, au moyen de tables mobiles et/ou de miroirs mobiles.

Selon un mode de réalisation, le procédé de fabrication peut comprendre une étape d'usinage et/ou de rectification de l'ébauche, exécutée à l'issue de l'étape de formation de l'ébauche et notamment entre l'étape de formation de l'ébauche et l'étape de formation de ladite au moins une couche de revêtement. On peut prévoir typiquement d'usiner/rectifier tout ou partie des surfaces fonctionnelles du composant horloger avant d'effectuer le revêtement, mais on peut prévoir d'usiner/rectifier des surfaces du composant horloger à d'autres moments.

Selon un mode de réalisation, le procédé de fabrication peut comprendre une étape de terminaison de l'ébauche exécutée à l'issue de l'étape de formation de l'ébauche, et notamment entre l'étape de formation de l'ébauche et l'étape de formation de ladite au moins une couche de revêtement. Une étape de terminaison peut typiquement induire une modification de l'état de surface, notamment la rugosité, et/ou une modification de l'aspect de la surface comme la brillance. On peut prévoir typiquement d'effectuer une terminaison sur tout ou partie des surfaces visibles du composant horloger avant de former l'au moins une couche de revêtement, mais on peut prévoir d'effectuer une terminaison sur des surfaces du composant horloger à d'autres moments.

Selon un mode de réalisation, l'étape de formation de l'au moins une couche de revêtement comprend une étape de dépôt physique en phase vapeur (dépôt PVD), et/ou une étape de dépôt chimique en phase vapeur (dépôt CVD), et/ou une étape de dépôt de couche atomique (dépôt ALD). De tels procédés permettent de former des couches de revêtement très dures (par exemple d'une dureté supérieure à 500 HV, de préférence supérieure à 1000 HV, ou encore plus préférentiellement supérieure à 1500 HV), et/ou avec des couleurs spécifiques ou à tout le moins différentes de la couleur du matériau de base de l'ébauche.

Selon un mode de réalisation, l'étape de formation de l'ébauche est effectuée pour former une ébauche comprenant un matériau céramique et/ou un matériau métallique et/ou un cermet. Un cermet est typiquement un matériau à squelette céramique, au sein duquel existe une phase métallique.

Selon un mode de réalisation, l'étape de formation d'au moins une couche de revêtement comprend la formation d'au moins une couche en matériau céramique et/ou d'au moins une couche en matériau comprenant un composé métallique.

Selon un mode de réalisation, l'étape de formation d'au moins une couche de revêtement comprend la formation d'au moins une couche comprenant au moins :
- un carbure de métal, en particulier du carbure de tungstène, et/ou du carbure de titane, et/ou du carbure de zirconium, et/ou du carbure de tantale, et/ou du carbure de niobium, et/ou du carbure de chrome, et/ou du carbure de hafnium, et/ou
- au moins un nitrure de métal, en particulier du nitrure de chrome, et/ou du nitrure de bore, et/ou du nitrure de zirconium, et/ou du nitrure de titane, et/ou du nitrure de tantale, et/ou du nitrure de niobium, et/ou du nitrure de hafnium, et/ou
- une combinaison de différents carbures de métal comme ci-dessus et/ou une combinaison de différents nitrures de métal comme ci-dessus, et/ou une combinaison d'un nitrure de métal comme ci-dessus et d'un carbure de métal comme ci-dessus dans un alliage.

Selon un mode de réalisation, le métal de la couche de revêtement fait partie du groupe comprenant le tungstène (W), et/ou le titane (Ti), et/ou le zirconium (Zr), et/ou le tantale (Ta), et/ou le niobium (Nb), et/ou le chrome (Cr), et/ou l'hafnium (Hf), et/ou l'or (Au), et/ou le palladium (Pd), et/ou le platine (Pt), ou leurs alliages tels que les alliages titane-aluminium (TiAI), chrome-aluminium (CrAI), hafnium-titane (HfTi).

Selon un mode de réalisation, l'étape de texturation est prévue pour texturer l'au moins une couche de revêtement et/ou la surface de base et/ou la portion en saillie, en formant un satinage, et/ou un brossage, et/ou un colimaçonnage, et/ou un soleillage, et/ou au moins une côte de Genève, et/ou un perlage et/ou un cerclage et/ou tout type de décor à motifs répétés.

Un second aspect de l'invention peut se rapporter à un procédé de fabrication d'une pièce d'horlogerie, comprenant les étapes consistant à :
- se munir d'un composant horloger fabriqué selon le procédé de fabrication selon le premier aspect de l'invention,
- assembler le composant horloger dans la pièce d'horlogerie, de sorte à positionner dans une partie visible de la pièce d'horlogerie au moins une partie du composant horloger où :
- ladite au moins une couche de revêtement a été au moins en partie retirée et/ou texturée, et/ou
- la surface de base et/ou l'au moins une portion en saillie a été texturée.

Un troisième aspect de l'invention peut se rapporter à un composant horloger destiné à être monté dans une pièce d'horlogerie, comprenant un corps, ou se présentant sous la forme d'un corps, formé à partir d'une ébauche, selon le procédé de fabrication selon le premier aspect de l'invention. Selon un mode de réalisation, le composant horloger peut être un assemblage de plusieurs pièces. En particulier, le composant horloger peut être une lunette de montre venue d'une seule pièce, ou le composant horloger peut être une lunette de montre comprenant par exemple une bague de lunette (une embase) et un disque de lunette, rapporté ou chassé ou serti sur la bague de lunette.

Selon un mode de réalisation, le corps comprend une surface de base, au moins une portion en saillie ou en relief par rapport à la surface de base et comprenant un sommet et au moins un flanc agencé entre la surface de base et le sommet. Le sommet présente de préférence une surface parallèle à celle de la surface de base, mais il peut également présenter une surface qui n'est pas parallèle à la surface de base. Le sommet et ledit au moins un flanc de ladite portion en saillie dudit corps sont recouverts par un revêtement formé selon le procédé de fabrication selon le premier aspect de l'invention, et la surface de base dudit corps a été texturée selon le procédé de fabrication selon le premier aspect de l'invention.

Autrement dit le composant horloger comprend :
un corps comprenant :
   - une surface de base,
   - au moins une portion en saillie ou en relief par rapport à la surface de base et comprenant un sommet et au moins un flanc agencé entre la surface de base et le sommet,
dans lequel le sommet et ledit au moins un flanc sont recouverts par un revêtement (au moins une couche de revêtement),
et dans lequel la surface de base est texturée,
   - la surface de base ayant été revêtue en même temps que le sommet et ledit au moins un flanc,
   - le revêtement de la surface de base ayant été retiré par un traitement laser également utilisé pour (de préférence simultanément) texturer la surface de base, et le traitement laser utilisant une source laser émettant des impulsions ultracourtes (de l'ordre de la nanoseconde, de la picoseconde, ou de la femtoseconde).
Selon la mise en oeuvre ci-dessus, on obtient un composant horloger avec au moins une portion en saillie (sommet et flancs compris) revêtue, en particulier des parties en saillie (sommets et flancs compris) revêtues, et une surface de base texturée, sans aucune zone intermédiaire de transition entre ces surfaces.

Selon un mode de réalisation, le composant horloger peut former un composant d'habillage horloger tel qu'une lunette, ou un disque de lunette, ou un cadran, ou une couronne, ou un poussoir, ou un couvercle de fermoir.

Selon un mode de réalisation, l'au moins une portion en saillie comprend au moins un sommet et un flanc agencé entre le sommet de l'au moins une portion en saillie et la surface de base, et dans lequel ledit au moins un flanc présente un angle de dépouille par rapport à une normale de la surface de base préférentiellement compris entre 5° et 25°, en particulier entre 10° et 20°.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une partie en perspective d'une pièce d'horlogerie qui comprend un composant horloger selon l'invention, formant dans cet exemple particulier un disque de lunette de la pièce d'horlogerie ;
[fig. 2] représente une vue en perspective du disque de lunette de la pièce d'horlogerie de la figure 1 ;
[fig. 3a] représente une première étape d'un schéma simplifié d'un procédé de fabrication du disque de lunette de la figure 2 ;
[fig. 3b] représente une deuxième étape d'un schéma simplifié d'un procédé de fabrication du disque de lunette de la figure 2 ;
[fig. 3c] représente une troisième étape d'un schéma simplifié d'un procédé de fabrication du disque de lunette de la figure 2 ;
[fig. 4] représente une coupe du disque de lunette de la figure 2 selon l'axe II-II de cette figure, à la première étape du procédé de fabrication de la figure 3a ;
[fig. 5] représente la coupe de la figure 4 à la deuxième étape du procédé de fabrication de la figure 3b ;
[fig. 6] représente la coupe de la figure 4 à une première variante de la troisième étape du procédé de fabrication de la figure 3c ;
[fig. 7] représente la coupe de la figure 4 à une deuxième variante de la troisième étape du procédé de fabrication de la figure 3c ;
[fig. 8] représente la coupe de la figure 4 à une troisième variante de la troisième étape du procédé de fabrication de la figure 3c.

### Description détaillée de mode(s) de réalisation

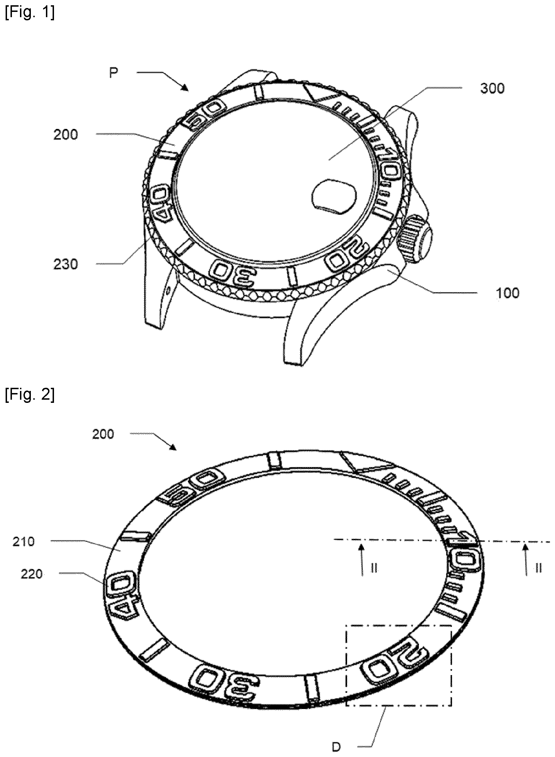

La figure 1 représente une partie en perspective d'une pièce d'horlogerie P qui comprend de manière générale :
- une carrure 100,
- un composant horloger selon l'invention, formant dans cet exemple particulier une lunette comprenant un disque de lunette 200 solidaire d'une bague de lunette 230 crantée et montée tournante sur la carrure 100,
- une interface d'affichage 300 pouvant comprendre notamment un cadran, des index, des aiguilles et des chiffres pour donner notamment une indication horaire ou temporelle à un utilisateur.

La figure 2 représente une vue en perspective du disque de lunette 200 de la pièce d'horlogerie P de la figure 1. Le disque de lunette 200 comprend notamment :
- une surface de base 210,
- des portions en saillie 220 par rapport à la surface de base 210, formant ici des chiffres et des index.
Le disque de lunette 200 de la figure 2 est prévu pour être accouplé à une bague de lunette 230 comprenant une partie latérale, ici crantée comme le montre la figure 1 pour permettre à un utilisateur de faire tourner la lunette par rapport à la carrure 100 de la pièce d'horlogerie P de la figure 1. Bien entendu, le disque de lunette 200 et/ou plus particulièrement la bague de lunette 230 peut comprendre en face inférieure des surfaces fonctionnelles usinées pour permettre un montage en liaison pivot sur la carrure 100 de la pièce d'horlogerie P de la figure 1. En alternative, la lunette peut être fixée sur la carrure 100.

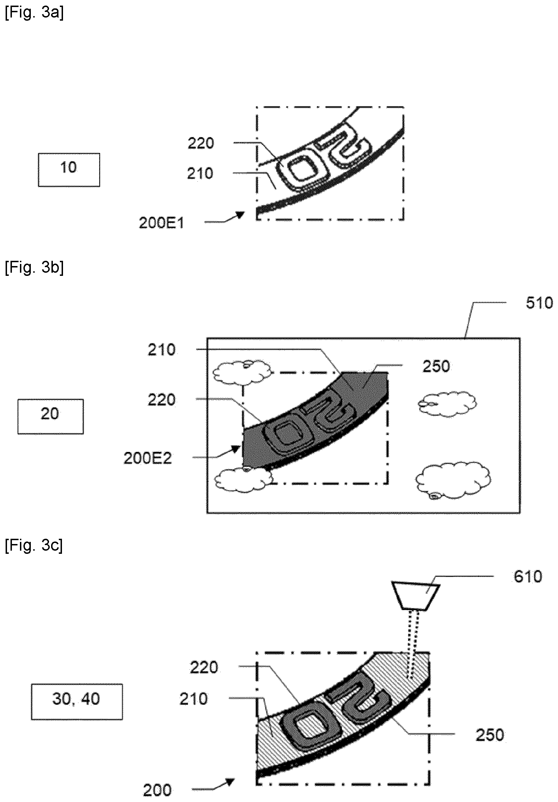

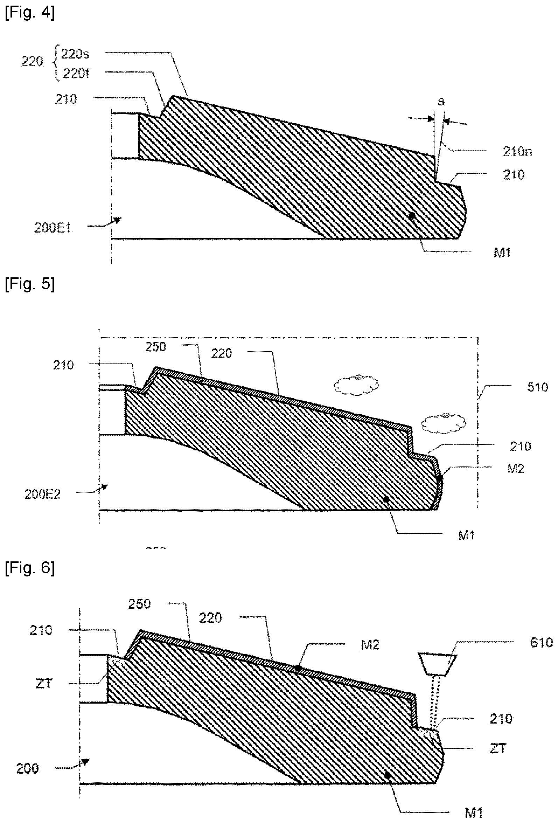

La présente divulgation a pour but de proposer une mise en valeur du disque de lunette 200 avec des motifs en saillie ou en relief positif sur une embase et avec des couleurs et/ou des textures différentes, mais la figure 1 et la figure 2, pour des raisons de clarté, ne montrent pas ces couleurs et/ou des textures différentes. On se reportera à cet effet à la figure 3c (ou encore aux figures 6 à 8) qui montre(nt) différents aspects entre les surfaces de la pièce fabriquée.

La présente divulgation se rapporte donc à un composant horloger, comme le disque de lunette 200 de la figure 2, ou peut se rapporter de manière spécifique à une lunette ou à un cadran, qui comportent des motifs colorés en saillie ou en relief positif sur une embase, par exemple céramique ou métallique texturée.

Pour ce faire, en vue d'obtenir spécifiquement un disque de lunette 200, la présente divulgation se rapporte à un procédé qui comporte notamment les étapes successives représentées de manière très schématique sur les figures 3a-3c et listées ci-dessous :
- (10 - figure 3a) : former une ébauche 200E1, notamment par injection, comportant au moins la surface de base 210 et au moins une portion en saillie 220 par rapport à la surface de base 210,
- (20 - figure 3b) : former au moins une couche de revêtement 250 recouvrant au moins une partie de la surface de base 210 et/ou au moins une partie de la portion en saillie 220, pour obtenir une ébauche revêtue 200E2,
- (30 - figure 3c) : retirer par ablation laser au moins une partie de ladite au moins une couche de revêtement 250, et de préférence simultanément (40) : texturer par traitement laser au moins une partie de la surface de base 210 préalablement recouverte par ladite ou moins une couche de revêtement 250, pour obtenir le disque de lunette 200.

Cette description ci-dessus du procédé de fabrication liste les étapes principales du procédé, et dans le détail, on peut prévoir les caractéristiques suivantes.

Une première étape 10 consiste donc à obtenir une ébauche 200E1 avec des portions en saillie 220.

Selon un premier mode de réalisation et une première sous-étape de l'étape 10 de formation d'une ébauche 200E1, les ébauches 200E1 peuvent être obtenues par un procédé de moulage, de type injection ou pressage.

Le matériau du composant qui est injecté peut être un métal, un composite, un cermet, ou une céramique technique. Avantageusement, la céramique technique peut être majoritairement ou principalement (en masse ou en mole) composée d'oxyde de zirconium, et/ou d'alumine. Ainsi, l'oxyde de zirconium et/ou l'alumine peuvent être les éléments prépondérants dans la céramique. Divers éléments peuvent être ajoutés à cette céramique technique pour améliorer ses performances, tels que Hf, Y, Al, Si, Mg, Fe, Ni, Cr, Zn, Co, Mn, Cu, Ti, Ta, W, Pt, comme connu de l'homme du métier. La zircone yttriée (2Y-ZrO2 ou 3Y-ZrO2), comme cela est décrit dans la demande de brevet WO2022101450, peut être utilisée pour l'ébauche de composant horloger. Alternativement, la céramique technique utilisée pourrait être par exemple en verre, en saphir, ou en matériau minéral.

Dans le cas d'un métal, l'injection peut comprendre l'injection d'un alliage métallique en fusion ou à l'état vitreux (à savoir à une température d'injection inférieure à la température de fusion et supérieure à la température de transition vitreuse) dans le moule d'injection. Après son refroidissement, il est possible d'obtenir par exemple une ébauche 200E1 de composant horloger dans un matériau amorphe, comme un verre métallique. Notamment, le matériau de l'ébauche peut être tout alliage amorphe dont la GFA (en langue anglaise Glass Forming Ability) permet d'obtenir une structure amorphe dans les dimensions typiques de composants horlogers, notamment un alliage métallique amorphe comprenant une base métallique formée d'au moins un métal parmi les éléments nickel (Ni), cuivre (Cu), palladium (Pd), platine (Pt), fer (Fe), cobalt (Co), titane (Ti), niobium (Nb), zirconium (Zr) et leurs alliages ou mélanges.

Dans le cas d'une céramique technique ou d'un cermet, les ébauches 200E1 sont notamment obtenues par un procédé d'injection incluant une étape de frittage du corps vert obtenu après injection. On peut par exemple considérer des cermets comprenant une phase céramique type carbure de tungstène, et/ou carbure de titane, et/ou carbure de zirconium et un liant métallique comprenant un ou plusieurs des éléments Ag, Pd, Co, Ni, Mo, Ru, Rh, Os, Ir, Pt, Au.

Selon un autre mode de réalisation, les ébauches 200E1 peuvent être obtenues par étampage, type nutation ou frappe, ou par pressage.

Ces pièces à étamper sont préférentiellement à base d'un métal ou d'un alliage métallique.

Selon encore un autre mode de réalisation, les ébauches 200E1 peuvent être obtenues par usinage, en particulier par usinage laser ou par usinage mécanique d'un élément céramique ou métallique ou d'un cermet.

La vue de la figure 3a représente donc une ébauche 200E1 formée selon l'une des techniques ci-dessus.

On peut prévoir de former une pièce d'un seul tenant (l'ébauche 200E1 est venue d'une seule pièce), ou on peut alternativement prévoir une pièce composite et/ou assemblée avec une bague de lunette venue d'une première matière, et le disque de lunette 200 rapporté venu d'une deuxième matière.

La figure 4 représente une coupe du disque de lunette 200 de la figure 2 selon l'axe II-II de cette figure, à l'issue de la première étape. L'ébauche 200E1 comprend des portions en saillie 220 par rapport à la surface de base 210 et qui comprennent un sommet 220s et des flancs 220f, agencés entre le sommet 220s et la surface de base 210.

Les portions en saillie 220 s'étendent selon une normale 210n à la surface de base 210 sur une distance ou sur une hauteur inférieure à 1 mm, de préférence inférieure à 0.5 mm, et très préférentiellement inférieure à 0.3 mm depuis la surface de base 210. Ces motifs peuvent s'étendre sur une hauteur d'au moins 0.1 mm, voire 0.15 mm, voire 0.2 mm, voire 0.25 mm, voire 0.5 mm depuis la surface de base 210 de l'ébauche 200E1.

Avantageusement, les flancs 220f des portions en saillie 220 forment par ailleurs un angle différent de 90° par rapport à la surface de base. En référence à la figure 4, l'angle a entre le flanc 220f et une normale 210n à la surface de base 210 peut être égal à 15°. Plus généralement, cet angle a est inférieur ou égal à 30°, voire inférieur ou égal à 25°, voire inférieur ou égal à 20°, voire inférieur ou égal à 15°, voire inférieur ou égal à 10°, voire inférieur ou égal à 5°. Alternativement, cet angle a peut être égal à 0°.

Une seconde sous-étape de l'étape 10 de formation d'une ébauche 200E1 peut consister à usiner, en particulier rectifier, par meulage par exemple, les surfaces formant les diamètres intérieur et/ou extérieur, ainsi que la surface formant le dessous de l'ébauche 200E1 du disque de lunette 200.

Il est naturellement possible de reporter et/ou compléter cette étape après n'importe laquelle des étapes du procédé. En particulier, on peut par exemple prévoir d'usiner la partie latérale 230 crantée en toute fin du procédé de fabrication.

Une troisième sous-étape de l'étape 10 de formation d'une ébauche 200E1 peut consister à réaliser une terminaison de l'ébauche 200E1 obtenue.

Il peut par exemple s'agir d'une étape de terminaison permettant d'obtenir une modification de l'état de surface de l'au moins une surface visible de l'ébauche 200E1 par médias interposés, préférentiellement de l'ensemble des surfaces de l'ébauche 200E1. Cette étape peut comprendre, par exemple, la sollicitation mécanique d'un mélange abrasif par impacts, par exemple par mise en mouvement vibratoire, oscillatoire ou rotatif, par exemple dans une cuve (tribofinition) d'au moins une ébauche 200E1 du disque de lunette 200, préférentiellement d'une multitude d'ébauches 200E1. Elle comprend aussi par exemple, de manière non limitative, le tonnelage, et/ou la trovalisation, et/ou le sablage et/ou le microbillage et/ou le giclage humide de l'au moins une surface visible de l'ébauche 200E1, en particulier de l'ensemble des surfaces de l'ébauche 200E1.

Alternativement, cette étape peut comprendre une étape de polissage laser, ou électrochimique pour les pièces métalliques.

Il peut être ensuite envisagé un lapidage du sommet 220s des portions en saillie 220 de l'ébauche 200E1, en particulier au niveau de leur surface supérieure.

Le procédé de fabrication peut se poursuivre avec l'étape 20 de formation d'au moins une couche de revêtement 250 sur une partie de l'ébauche 200E1, pour obtenir une ébauche revêtue 200E2. Dans le détail, cette étape peut consister à déposer au moins une couche formant un revêtement 250 sur la face visible de l'ébauche 200E1, qui comprend les portions en saillie 220, comme cela est visible sur la figure 3b ou sur la coupe de la figure 5. Préférentiellement, le matériau de la couche déposée est un métal ou un alliage métallique ou une céramique. Le dépôt peut être d'aspect métallique ou céramique. Cette étape permet de former au moins une couche d'un revêtement sur la surface supérieure des portions en saillie 220, ainsi que sur les flancs 220f desdites portions en saillie 220, ce qui peut avantageusement être favorisé par le fait que les flancs forment un angle a supérieur à 0° en regard de la normale 210n à la surface base 210 de l'ébauche 200E1. Cette étape permet également de former l'au moins une couche sur la surface de base 210 depuis laquelle s'étendent les portions en saillie 220.

Le procédé de dépôt peut s'effectuer dans une enceinte close 510, préférentiellement réalisé par dépôt physique en phase vapeur (PVD). Alternativement, le dépôt peut être réalisé par dépôt chimique (CVD) ou dépôt atomique (ALD).

Avantageusement, de telles techniques bien connues de l'homme de métier permettent, par exemple, d'obtenir des nitrures (CrN, TiN, ZrN...), des composés carbonés (TiC, WC), ou des combinaisons (TiCN, AlTiCN).

Préférentiellement, une couche d'un carbure de métal ou d'un nitrure de métal sera choisie pour la présente réalisation, comme par exemple :
- Carbure de tungstène, carbure de titane, carbure de zirconium, carbure de tantale, carbure de niobium, carbure de chrome, carbure de hafnium.
- Nitrure de titane, nitrure de zirconium, nitrure de chrome, nitrure de tantale, nitrure de niobium, nitrure de hafnium, nitrure de bore.

Les propositions sont très larges. De multiples combinaisons sont envisageables, comme par exemple :
- Une combinaison de deux nitrures et/ou carbures d'alliages métalliques, telle que TiAIN / CrAIN ;
- Une combinaison de nitrure et de carbure, telle que le HfTiCN, qui peut procurer un éclat métallique mordoré.

Préférentiellement, une couche de nitrure de chrome CrN pourra être choisie pour la présente réalisation, et ce en regard de sa grande dureté (on peut obtenir par exemple une dureté supérieure à 1000 HV, de préférence supérieure à 1500HV). Plus généralement, on peut privilégier une couche dure à base de céramique afin de former le revêtement ou de former au moins partiellement le revêtement, si possible d'aspect métallique.

Bien entendu, il est envisageable de déposer plusieurs couches superposées afin de former le revêtement. Par exemple, une couche de nitrure de silicium Si₃N₄ pourrait être combinée à une couche de nitrure de titane afin d'obtenir un rendu particulier.

La deuxième étape principale 20 peut ainsi comprendre une succession de sous-étapes consistant à déposer des couches superposées comprenant ou à base de matériaux différents.

D'autres couches pourraient par ailleurs être envisagées. Une couche comprenant ou à base de carbone, communément connue sous le nom de DLC (pour Diamond-Like Carbon en langue anglaise) pourrait par exemple être déposée. Alternativement, une couche comprenant ou à base d'oxydes pourrait être déposée.

Il est naturellement possible de combiner différentes couches afin d'obtenir une dureté et/un rendu particulier si celles-ci sont techniquement compatibles.

Ainsi, il est envisageable de déposer au moins une couche d'un oxyde métallique, notamment d'oxyde de tantale comme l'oxyde de tantale de stoechiométrie TazOs, ou un oxyde de titane, ou un oxyde de silicium, ou un oxyde d'aluminium, ou un oxyde d'alliage métallique, ou un oxynitrure métallique ou d'alliage métallique.

La figure 5 représente la coupe de la figure 4, la pièce étant placée dans l'enceinte close 510, pour appliquer une couche d'un revêtement 250 recouvrant toute la surface de base 210 et toutes les portions en saillie 220, pour obtenir une ébauche revêtue 200E2. De manière schématique, la matière de base de l'ébauche 200E2 est représentée M1, et la matière du revêtement 250 ou de la couche du revêtement 250 est représentée M2, pour bien montrer qu'on obtient une ébauche revêtue 200E2 comprenant au moins deux matières (la matière de base M1, et la matière M2 d'au moins une couche de revêtement).

Une fois le revêtement 250 appliqué sur les surfaces exposées (typiquement toutes les surfaces visibles) de l'ébauche 200E1, on peut prévoir de retirer ce revêtement sur une partie de ces surfaces, pour apporter un effet visuel supplémentaire avec des colorations différentes, et/ou aussi des texturations différentes.

A cet effet, une troisième étape 30 principale consiste à ôter par le biais d'une source laser 610 l'au moins une couche disposée sur l'une des surfaces exposées, simultanément à une quatrième étape 40 de texturation de cette surface de base 210.

Préférentiellement, on retire le revêtement de tout ou partie de la surface de base 210 lors de cette troisième étape 30.

Alternativement ou de manière complémentaire, on retire le revêtement de tout ou partie des surfaces des portions en saillie 220.

Cette étape 30 de retrait de l'au moins une couche déposée est préférentiellement simultanée avec une étape 40 de texturation des surfaces traitées.

La source laser 610 utilisée est préférentiellement une source laser 610 à impulsions ultracourtes, tel qu'un laser à impulsions nanosecondes, picosecondes ou femtosecondes.

La source laser 610 enlève localement de la matière sur une épaisseur pouvant dépasser l'épaisseur de l'au moins une couche préalablement déposée. On peut noter que l'enlèvement de matière ne doit pas fragiliser le composant horloger. Une épaisseur maximale d'ablation laser peut être définie en fonction de la matière et/ou de la géométrie de la pièce. On peut aussi prévoir de faire plusieurs passes.

La source laser 610 peut également créer des reliefs esthétiques sur la au moins une couche décorative et/ou sur les surfaces du substrat mises à nu. En particulier, la source laser 610 peut créer des reliefs esthétiques sur les surfaces du substrat en ôtant l'au moins une couche préalablement déposée. On peut citer à titre d'exemples la possibilité de texturer la ou les surfaces avec un satinage, un brossage, un colimaçonnage, un soleillage, ou en réalisant des côtes de Genève, un perlage ou encore un cerclage. La figure 3c montre schématiquement un soleillage formé sur la surface de base 210.

Selon un premier mode de réalisation illustré sur la figure 6, l'ablation laser s'effectue sur la surface de base 210 et sur le flanc de l'ébauche revêtue 200E2, sur une épaisseur au moins égale à l'épaisseur de l'au moins une couche déposée, et une texturation simultanée de la surface de base 210 ainsi révélée est réalisée, de sorte à effectuer par exemple un soleillage (sur cette figure, les zones texturées sont notées ZT pour bien montrer leur position). Ni les portions en saillie 220 (ni leurs sommets 220s ni leurs flancs 220s) ne sont ici touchées par le faisceau laser. Le faisceau laser a ainsi pour double fonction d'ôter la couche de matière M2 du revêtement 250 et de décorer la surface de base 210 de l'ébauche revêtue 200E2.

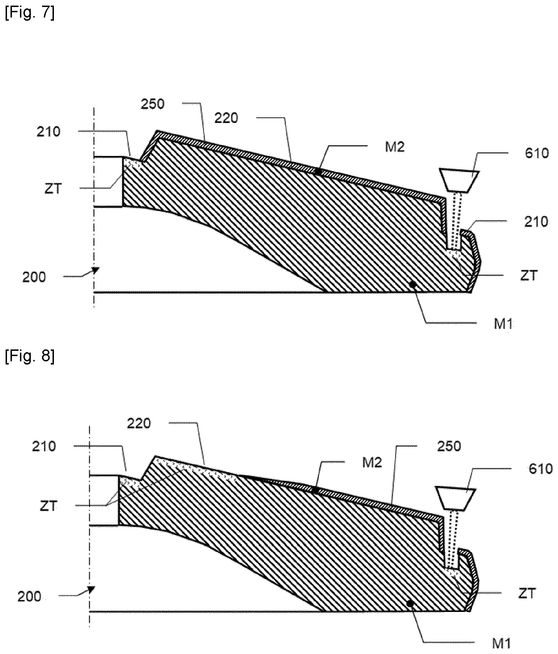

Selon un second mode de réalisation illustré notamment sur la figure 7, l'ablation laser peut être effectuée sur une partie de la surface de base 210 (partie gauche de la figure 7), et on peut prévoir d'usiner et de texturer avec la source laser 610 une cavité ou une fente dans la matière M1 de l'ébauche revêtue 200E2, comme le montre la partie droite de la figure 7. Sur cette figure, les zones texturées sont notées ZT pour bien montrer leur position.

Selon un troisième mode de réalisation illustré notamment sur la figure 8, l'ablation laser peut être effectuée localement sur l'ébauche, sur les portions en saillie 220 (et/ou ses flancs et/ou sur l'embase), sur une épaisseur pouvant être variable. Une texturation de la surface mise à nu peut être réalisée localement sur la pièce avec le même laser durant la même opération.

Une ablation à épaisseur évolutive comme montré sur la figure 8 peut avoir un effet esthétique très intéressant. Dans l'au moins une couche déposée, cela peut par exemple introduire un dégradé de couleur. Sur la pièce dans son entier, cela peut apporter des reflets et une impression de profondeur. Sur cette figure, les zones texturées sont notées ZT pour bien montrer leur position.

### Application industrielle

Un procédé de fabrication et/ou un composant horloger selon la présente invention, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

## Revendications

1. Procédé de fabrication d'un composant horloger, comprenant les étapes consistant à :
- (10) former une ébauche (200E1), notamment par injection, comportant au moins une surface de base (210) et au moins une portion en saillie (220) par rapport à la surface de base (210),
- (20) former au moins une couche de revêtement (250) recouvrant au moins une partie de la surface de base (210) et/ou recouvrant au moins une partie de l'au moins une portion en saillie (220),
- (30) retirer par ablation laser au moins une partie de ladite au moins une couche de revêtement (250),
- (40) texturer par traitement laser au moins une partie de la surface de base (210) préalablement recouverte par ladite au moins une couche de revêtement (250) et/ou au moins une partie de l'au moins une portion en saillie (220) préalablement recouverte par ladite au moins une couche de revêtement (250), et/ou au moins une partie de l'au moins une couche de revêtement (250).

2. Procédé de fabrication selon la revendication précédente, dans lequel l'étape (30) de retrait par ablation laser est effectuée pour :
- retirer localement une épaisseur totale du revêtement (250) et éventuellement une épaisseur de l'ébauche (200E1) depuis la surface de base (210) et/ou
- retirer localement une épaisseur du revêtement (250) inférieure à l'épaisseur totale du revêtement (250) et/ou
- retirer localement une épaisseur variable du revêtement (250) strictement inférieure à l'épaisseur totale du revêtement (250).

3. Procédé de fabrication selon l'une des revendications précédentes, ladite au moins une portion en saillie (220) comprenant au moins une surface formant un sommet (220s) et au moins une surface formant un flanc (220f) agencé entre le sommet (220s) et la surface de base (210),
dans lequel l'étape de formation de ladite au moins une couche de revêtement (250) est prévue pour former un revêtement (250) recouvrant au moins une partie de la surface de base (210), au moins une partie de la surface formant le sommet (220s) de l'au moins une portion en saillie (220) et au moins une partie de la surface formant le flanc (220f) de l'au moins une portion en saillie (220),
dans lequel l'étape (30) de retrait est effectuée pour retirer le revêtement (250) recouvrant la surface de base (210),
et dans lequel l'étape (40) de texturation est effectuée pour texturer au moins une partie de la surface de base (210).

4. Procédé de fabrication selon l'une des revendications précédentes, dans lequel l'étape (30) de retrait par ablation laser et l'étape (40) de texturation par traitement laser sont au moins partiellement simultanées, et/ou effectuées avec une même source laser (610).

5. Procédé de fabrication selon l'une des revendications précédentes, dans lequel l'étape (30) de retrait par ablation laser et/ou l'étape (40) de texturation par traitement laser sont effectuées avec une source laser (610) à impulsions ultracourtes, et de préférence avec une source laser (610) à impulsions agencée pour émettre des impulsions de l'ordre de la nanoseconde, et plus préférentiellement de l'ordre de la picoseconde, et encore plus préférentiellement de l'ordre de la femtoseconde.

6. Procédé de fabrication selon l'une des revendications précédentes, comprenant une étape d'usinage et/ou de rectification de l'ébauche (200E1), exécutée à l'issue de l'étape (10) de formation de l'ébauche (200E1) et notamment entre l'étape (10) de formation de l'ébauche (200E1) et l'étape (20) de formation de ladite au moins une couche de revêtement (250).

7. Procédé de fabrication selon l'une des revendications précédentes, comprenant une étape de terminaison de l'ébauche (200E1) exécutée entre l'étape (10) de formation de l'ébauche (200E1) et l'étape (20) de formation de ladite au moins une couche de revêtement (250).

8. Procédé de fabrication selon l'une des revendications précédentes, dans lequel l'étape (20) de formation de ladite au moins une couche de revêtement (250) comprend une étape de dépôt physique en phase vapeur (PVD), et/ou une étape de dépôt chimique en phase vapeur (CVD), et/ou une étape de dépôt de couche atomique (ALD).

9. Procédé de fabrication selon l'une des revendications précédentes, dans lequel l'étape (20) de formation de ladite au moins une couche de revêtement (250) comprend la formation d'au moins une couche en matériau céramique et/ou d'au moins une couche en matériau comprenant un composé métallique.

10. Procédé de fabrication selon la revendication précédente, dans lequel l'étape (20) de formation de ladite au moins une couche de revêtement (250) comprend la formation d'au moins une couche comprenant au moins :
- un carbure de métal, en particulier du carbure de tungstène, et/ou du carbure de titane, et/ou du carbure de zirconium, et/ou du carbure de tantale, et/ou du carbure de niobium, et/ou du carbure de chrome, et/ou du carbure de hafnium, et/ou
- au moins un nitrure de métal, en particulier du nitrure de chrome, et/ou du nitrure de bore, et/ou du nitrure de zirconium, et/ou du nitrure de titane, et/ou du nitrure de Zirconium, et/ou du nitrure de tantale, et/ou du nitrure de niobium, et/ou du nitrure de hafnium, et/ou
- une combinaison desdits différents carbures de métal et/ou desdits nitrures de métal, et/ou une combinaison d'un desdits nitrures de métal et d'un desdits carbures de métal dans un alliage.

11. Procédé de fabrication selon la revendication précédente, dans lequel le métal de l'au moins une couche de revêtement (250) fait partie du groupe comprenant le tungstène (W), et/ou le titane (Ti), et/ou le zirconium (Zr), et/ou le tantale (Ta), et/ou le niobium (Nb), et ou le chrome (Cr), et/ou l'hafnium (Hf), ou leurs alliages tels que les alliages titane-aluminium (TiAI), chrome-aluminium (CrAI), hafnium-titane (HfTi).

12. Procédé de fabrication selon l'une des revendications précédentes, dans lequel l'étape (40) de texturation est prévue pour texturer au moins une couche de revêtement (250) et/ou la surface de base (210) et/ou la portion en saillie (220) en formant un satinage, et/ou un brossage, et/ou un colimaçonnage, et/ou un soleillage, et/ou au moins une côte de Genève, et/ou un perlage et/ou un cerclage et/ou tout type de décor à motifs répétés.

13. Composant horloger destiné à être monté dans une pièce d'horlogerie, comprenant un corps ou se présentant sous la forme d'un corps formé à partir d'une ébauche (200E1), selon le procédé de fabrication de l'une des revendications 1 à 12.

14. Composant horloger selon la revendication précédente, dans lequel le corps comprend une surface de base (210), au moins une portion en saillie (220) par rapport à la surface de base (210) et comprenant un sommet (220s) et au moins un flanc (220f) agencé entre la surface de base (210) et le sommet (220s), dans lequel le sommet (220s) et ledit au moins un flanc (220f) ont été recouverts par un revêtement (250) formé selon le procédé de fabrication de l'une des revendications 1 à 12, et dans lequel la surface de base (210) a été texturée selon le procédé de fabrication de l'une des revendications 1 à 12.

15. Composant horloger selon l'une des revendications 13 ou 14, formant un composant d'habillage horloger tel qu'une lunette (200), ou un disque de lunette, ou un cadran, ou une couronne, ou un poussoir, ou un couvercle de fermoir.

16. Composant horloger selon l'une des revendications 13 à 15, dans lequel l'au moins une portion en saillie (220) comprend au moins un sommet (220s) et un flanc (220f) agencé entre le sommet (220s) de la portion en saillie (220) et la surface de base (210), et dans lequel ledit au moins un flanc (220f) présente un angle de dépouille par rapport à une normale (210n) de la surface de base (210) préférentiellement compris entre 5° et 25°, en particulier entre 10° et 20°.

17. Composant horloger selon l'une des revendications 13 à 16, dans lequel l'ébauche (200E1) comprend un matériau céramique et/ou un matériau métallique et/ou un cermet.
